# EUROPEAN PATENT APPLICATION

(11) **EP 2 784 452 A1**
(43) Date of publication of application: **01.10.2014**
(21) Application number: 13197133.5
(22) Date of filing: 13.12.2013
(51) Int. Cl.: G01G 3/14

(54) **Flexure element, load cell, and weight measuring device**

(30) Priority: 27.03.2013 JP 2013065435
(71) Applicant: Tanita Corporation, Tokyo 174 (JP)
(72) Inventor: Tsutaya, Takao, Itabashi-ku, Tokyo 174-8630 (JP); Sasaki, Shinji, Itabashi-ku, Tokyo 174-8630 (JP); Kobayashi, Kotaku, Itabashi-ku, Tokyo 174-8630 (JP)
(74) Representative: Haley, Stephen

(57) **Abstract**

A flexure element used for weight measurement includes a load-applied part to which load is applied, a supported part supported by a supporter, and a flexure part connected to the load-applied part and the supported part, strain gauges being attached to the flexure part. The load-applied part, the supported part, and the flexure part include surfaces that lie on the same plane. The thickness of the flexure part is less than the thickness of the load-applied part and the thickness of the supported part. The flexure part has a recess at a side opposite to the plane, the recess being located between the load-applied part and the supported part.

## Description

### FIELD OF THE INVENTION

The present invention relates to a flexure element that is used in a load cell for measuring weight and which is deformed by a load transferred thereto, to a weight measuring device including the flexure element, and to a weight measuring device including the load cell.

### BACKGROUND ART

A weight measuring device such as a weighing scale includes at least one load cell to which a load applied to a platform is transferred. The load cell includes a flexure element that is deformed by a load and a plurality of strain gauges adhered to the flexure element. Patent Document 1 discloses such a flexure element.

Patent Document 2 discloses a flexure element including a first end, a second end, and a flexure part arranged between the first end and the second end, in which the flexure part has a thickness less than that of the first end and the second end. Load is applied to the first end, whereas the second end is supported by a supporter.

### RELATED ART DOCUMENTS

### Patent Documents

Patent Document 1: JP-B-2977278
Patent Document 2: JP-A-2008-309578

However, in the flexure element disclosed in Patent Document 2, each of the upper side and the lower side of the flexure part is formed to have a recess. Therefore, production cost of the flexure element is high since it is necessary to form recesses at both sides.

### SUMMARY OF THE INVENTION

Accordingly, the present invention provides a flexure element of which the production cost is low, a load cell that includes the flexure element, and a weight measuring device that includes the load cell.

A flexure element according to the present invention includes a load-applied part to which load is applied; a supported part supported by a supporter; a flexure part connected to the load-applied part and the supported part, strain gauges being attached to the flexure part. The load-applied part, the supported part, and the flexure part include surfaces that are on the same plane. The flexure part has a thickness that is less than a thickness of the load-applied part and a thickness of the supported part. The flexure part has a recess at a side opposite to the plane, the recess being located between the load-applied part and the supported part.

In the present invention, the load-applied part, the supported part, and the flexure part includes surfaces that lie on the same plane. A recess is formed at a side opposite to the plane, the recess being located between the load-applied part and the supported part, and corresponding to the flexure part. Therefore, the recess is formed at one side of the flexure element, thereby reducing the thickness of the flexure part to less than the thickness of the load-applied part and the thickness of the supported part. Since the recess is formed at only one side of the flexure element, the production cost of the flexure element may be lower in comparison with the structure in which a recess is formed at each of both sides of a flexure element for thinning the flexure part. By reducing the thickness of the flexure part to less than that of other parts, the second moment of area of the flexure part can be reduced and the flexure part can be bent more easily by a load. Therefore, when multiple strain gauges are attached to the flexure part in such a manner that the interval between the strain gauges are maintained, deviations in the locations of multiple strain gauges will not significantly affect the measurement accuracy, and so the weight measurement can be achieved with higher accuracy. Furthermore, by providing the recess to the flexure part and by reducing the thickness of the flexure part to less than that of other parts, the load cell that includes the flexure element can be made thinner.

The flexure element according to the present invention may have an axisymmetric shape with respect to a symmetric axis, and the flexure part may be arranged at a center of the flexure element, and it may extend in the same direction as that of the symmetric axis, and it may have a first end and a second end. The flexure element may further includes two first arm portions extending in parallel to the symmetric axis, a first connection portion extending in a direction crossing the symmetric axis and being connected to the first end of the flexure part and the first arm portions, two second arm portions located closer to the flexure part than the first arm portions and extending in parallel to the symmetric axis, and a second connection portion extending in the direction crossing the symmetric axis and being connected to the second end of the flexure part and the second arm portions. One of a set constituted of the two first arm portions and the first connection portion and a set constituted of the two second arm portions and the second connection portion is the load-applied part, whereas the other of the sets is the supported part. The recess is formed at only one side of the flexure element having such a complicated shape. Accordingly, the production cost of the flexure element may be lower in comparison with the structure in which a recess is formed at each of both sides of a flexure element.

Preferably, the flexure element is formed by powdered metallurgy. In this case, the flexure element may be decreased in size and the mechanical strength thereof may be ensured. Furthermore, since the dimensional accuracy in the thickness and the width of the flexure element is high, the weight measurement accuracy of the load cell is improved. The flexure element may be obtained by press-molding and sintering a metallic powder, or it may be obtained by metal injection molding. In other words, the scheme for powdered metallurgy may be press-molding and sintering a metallic powder or it may be metal injection molding. In powdered metallurgy, when the molded metallic powder compact is sintered, a block of the press-molded metallic powder compact is placed on a flat plane. By forming the recess only at one side of the flexure element according to the present invention, the block of the metallic powder, which is the material of the flexure element, can be deployed in such a manner that the surfaces of the load-applied part, the supported part, and the flexure part that are opposite to the recess are brought into contact with the flat plane. If there is a gap between the block of the metallic powder and the flat plane, it is likely that the flexure part will be undesirably deformed during the sintering. However, if the block of the metallic powder that is the material of the flexure element is deployed in such a manner that the surfaces of the load-applied part, the supported part, and the flexure part that are opposite to the recess are brought into contact with the flat plane, it is possible to restrain undesirable deformation of the flexure element that may occur due to sintering.

It is preferable that the recess include a first inclined surface located near the load-applied part and a second inclined surface located near the supported part, in which the first inclined surface is inclined such that the closer to the load-applied part, the farther away from the plane, and in which the second inclined surface is inclined such that the closer to the supported part, the farther away from the plane. By providing such a first inclined surface and such a second inclined surface in the recess, the flexure part has sections in which change in strain occurring by load is small (the sections correspond to the first inclined surface and the second inclined surface). By arranging the strain gauges at the sections, the measurement error that may be caused by deviations in locations of the strain gauges can be reduced.

The load-applied part may include a rib at a side opposite to the plane, and the supported part may include a rib at a side opposite to the plane. These ribs may improve the bending rigidity of the load-applied part and the supported part.

A load cell according to the present invention includes the above-described flexure element, and strain gauges attached to the flexure part of the flexure element and generating signals in response to the deformation of the flexure part.

The load cell according to the present invention may further include external cables connected to the strain gauges. Each of the strain gauges may be provided at a flexible substrate including wiring connected to the strain gauge, and may be located on the flexure part. The flexible substrate may extend from the flexure part to the load-applied part or the supported part. The wiring in each of the flexible substrates may be connected to any one of the external cables at a section in the load-applied part or the supported part, the section being within a thickness range of the load-applied part or the supported part. In this case, the wiring of each flexible substrate is connected to one of the external cables at the section in the load-applied part or the supported part, the section being within the thickness range of the load-applied part or the supported part. Therefore, the electrical connection part of the wiring and the cable do not protrude from the load-applied part or the supported part along the thickness direction. Therefore, the load cell can be made thinner.

A weight measuring device according to the present invention includes the above-described load cell and a platform for transmitting load to the load-applied part of the flexure element.

### BRIEF DESCRIPTION OF THE DRAWINGS

With reference to the accompanying drawings, various embodiments of the present invention will be described hereinafter. In the drawings:
Fig. 1 is a perspective view showing a weight measuring device according to a first embodiment of the present invention obliquely viewed from above;
Fig. 2 is a perspective view showing the weight measuring device of Fig. 1 obliquely viewed from below;
Fig. 3 is a plan view showing the weight measuring device of Fig. 1;
Fig. 4 is a plan view showing a load cell within the weight measuring device of Fig. 1;
Fig. 5 is a bottom view showing the load cell of Fig. 4;
Fig. 6 is a front view showing the load cell of Fig. 4;
Fig. 7 is an exploded perspective view of the load cell;
Fig. 8 is a perspective view showing a flexure element within the load cell obliquely viewed from below;
Fig. 9 is a bottom view showing the flexure element;
Fig. 10 is a plan view showing the flexure element;
Fig. 11 is a perspective view showing the flexure element to which a bridge is affixed;
Fig. 12 is a perspective view showing the bridge;
Fig. 13 is a cross-sectional view showing the bridge;
Fig. 14 is a cross-sectional view showing a leg of the load cell;
Fig. 15 is a cross-sectional view showing the load cell;
Fig. 16 is a cross-sectional view taken along line XVI-XVI in Fig. 3;
Fig. 17 is a graph showing distribution of strain when weight measurement is conducted with the use of the flexure element of the first embodiment and with the use of a comparative flexure element;
Fig. 18 is a cross-sectional view showing the flexure element of the first embodiment that is being manufactured;
Fig. 19 is a cross-sectional view showing another flexure element that is being manufactured;
Fig. 20 is a perspective view showing a flexure element according to a second embodiment of the present invention obliquely viewed from below;
Fig. 21 is a perspective view showing a flexure element according to a third embodiment of the present invention obliquely viewed from below;
Fig. 22 is a perspective view showing a flexure element according to a fourth embodiment of the present invention obliquely viewed from below;
Fig. 23 is a perspective view showing a flexure element according to a fifth embodiment of the present invention obliquely viewed from below;
Fig. 24 is a bottom view showing the flexure element according to the fifth embodiment;
Fig. 25 is a cross-sectional view taken along line XXV-XXV in Figs. 23 and 24;
Fig. 26 is a graph showing distribution of strain when weight measurement is conducted with the use of the flexure element of the first embodiment and with the use of the flexure element of the fifth embodiment;
Fig. 27 is a view showing distribution of stress occurring in the flexure element of the first embodiment when weight measurement is conducted;
Fig. 28 is a view showing distribution of stress occurring in the flexure element of the fifth embodiment when weight measurement is conducted;
Fig. 29 is a graph showing a relationship between locations of strain gauges and measurement errors when weight measurement is conducted with the use of the flexure element of the first embodiment and with the use of the flexure element of the fifth embodiment;
Fig. 30 is a graph showing a relationship between locations of strain gauges and outputs of strain gauges according to the flexure element of the first embodiment and the flexure element of the fifth embodiment;
Fig. 31 is a perspective view showing the flexure element with external cables in the first embodiment;
Fig. 32 is a perspective view showing a flexure element with external cables according to a variation of the first embodiment;
Fig. 33 is a perspective view showing a flexure element with external cables according to another variation of the first embodiment;
Fig. 34 is a perspective view showing a flexure element with external cables according to another variation of the first embodiment;
Fig. 35 is a perspective view showing a flexure element with external cables according to another variation of the first embodiment;
Fig. 36 is a perspective view showing a flexure element with external cables according to another variation of the first embodiment;
Fig. 37 is a perspective view showing a flexure element with external cables according to another variation of the first embodiment;
Fig. 38 is a perspective view showing a flexure element with external cables according to another variation of the first embodiment Fig. 39 is a perspective view showing a variation of the bridge; and
Fig. 40 is a cross-sectional view showing the bridge of Fig. 39.

### DESCRIPTION OF EMBODIMENTS

### FIRST EMBODIMENT

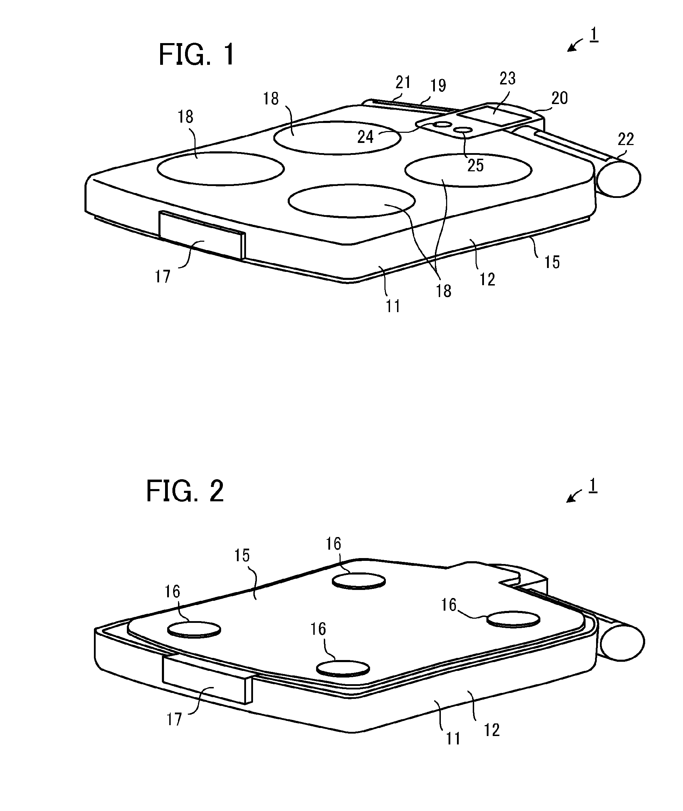

Figs. 1 and 2 show a weight measuring device according to a first embodiment of the present invention. The weight measuring device 1 is a weighing scale for measuring a human body weight, and is also a body composition meter for determining human body compositions such as body fat percentage. The weight measuring device 1 includes a housing 11 that includes a platform 12 and a base 15 fixed to the platform 12. As shown in Fig. 1, the platform 12 includes a substantially upper surface that is directed so as to lie horizontally when weight measurement is conducted. A human stands on the upper surface of the platform 12. That is, an object is placed on the platform 12 and the object's load is applied to the platform 12.

As shown in Fig. 2, the base 15 is of a substantially rectangular shape, and is made of a rigid material such as stainless steel or resin. A leg 16 is arranged at each of four corners of the bottom surface of the base 15. When weight measurement is conducted, the legs 16 are brought into contact with a floor. Another component may be interposed between each leg 16 and the floor. Each of the legs 16 serves as a support member that supports the weight measuring device 1 and also serves as a leg of a load cell, which will be described later. When weight measurement is conducted, the housing 11 as a whole including the platform 12 and the base 15 is displaced with respect to the legs 16 supported by the floor in response to the weight on the platform 12.

A power switch 17 for activating the weight measuring device 1 is attached to the housing 11, and the power switch 17 protrudes from a side surface of the platform 12. Since the weight measuring device 1 is used as the body composition meter, multiple electrode plates 18 are provided on the upper surface of the platform 12 as shown in Fig. 1. These electrode plates 18 are used to measure a human subject's bioelectrical impedance. The human subject stands on the platform 12 and steps on the electrode plates 18 with both feet.

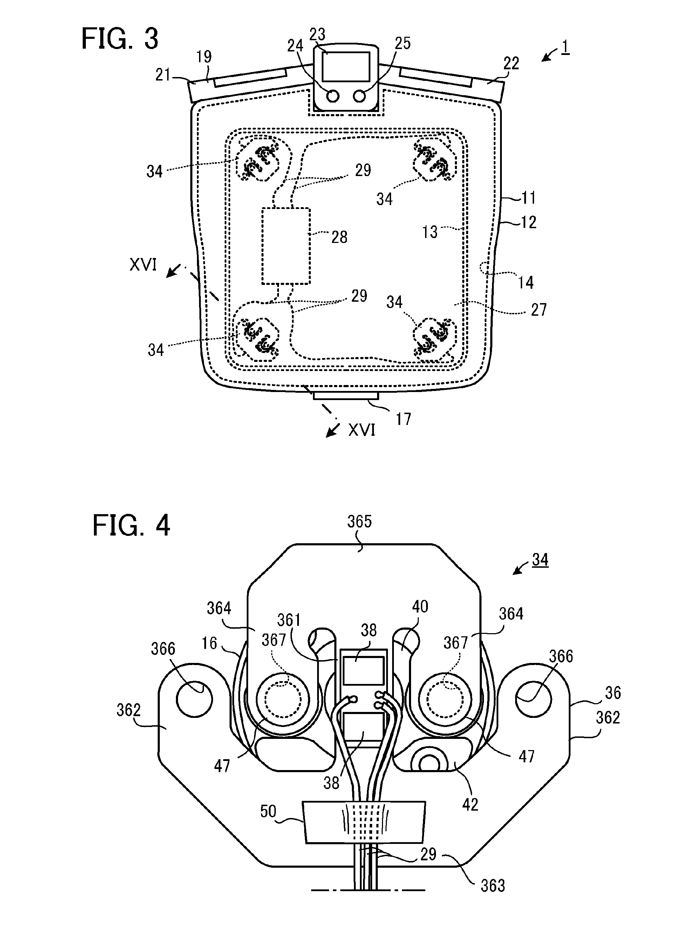

Fig. 3 is a plan view of the weight measuring device 1, whereas the electrode plates 18 are not illustrated in Fig. 3. As shown in Fig. 3, the platform 12 includes a box-like inner cover 13 made of a rigid metal, such as a steel, and an outer cover 14 made of resin arranged outside the inner cover 13. The outer cover 14 is an exterior cover of the platform 12, and it insulates the metallic inner cover 13 from the electrode plates 18.

The weight measuring device 1 includes a handle unit 19. The handle unit 19 is connected to the housing 11 through a cable (not shown). The handle unit 19 includes a central operation box 20 and grips 21 and 22 extending from both sides of the operation box 20. The operation box 20 is provided with a display 23 that displays the weight and the body compositions of the human subject, and operation buttons 24 and 25. Each of the grips 21 and 22 is provided with electrodes that are used to measure the human subject's bioelectrical impedance. These electrodes are gripped by both hands of the human subject who stands on the platform 12. The weight measuring device 1 according to the embodiment can also be used as a body composition meter, but since this embodiment relates to weight measurement, the electrode plates 18 and the handle unit 19 are not necessary.

As shown in Fig. 3, the inner cover 13 of the platform 12 and the base 15 connected to the platform 12 cooperate to define an accommodation space 27. Four load cells 34 for measuring weight are arranged inside the accommodation space 27. However, the legs 16 of load cells 34 protrude downward from the base 15 as shown in FIG. 2.

A substrate 28 on which a processing circuit for processing signals supplied from the strain gauges of the load cells 34 is mounted is located inside the accommodation space 27. The substrate 28 is connected to the strain gauges through cables 29. The processing circuit on the substrate 28 calculates the human subject's weight on the basis of signals supplied from the strain gauges of the load cells 34. In addition, the processing circuit on the substrate 28 is electrically connected to the electrode plates 18 on the platform 12 and the electrodes on the handle unit 19, and calculates the human subject's body compositions on the basis of the weight and change in the bioelectrical impedances at various positions of the human subject. The weight and the body compositions, which are calculated as described above, are displayed on the display 23.

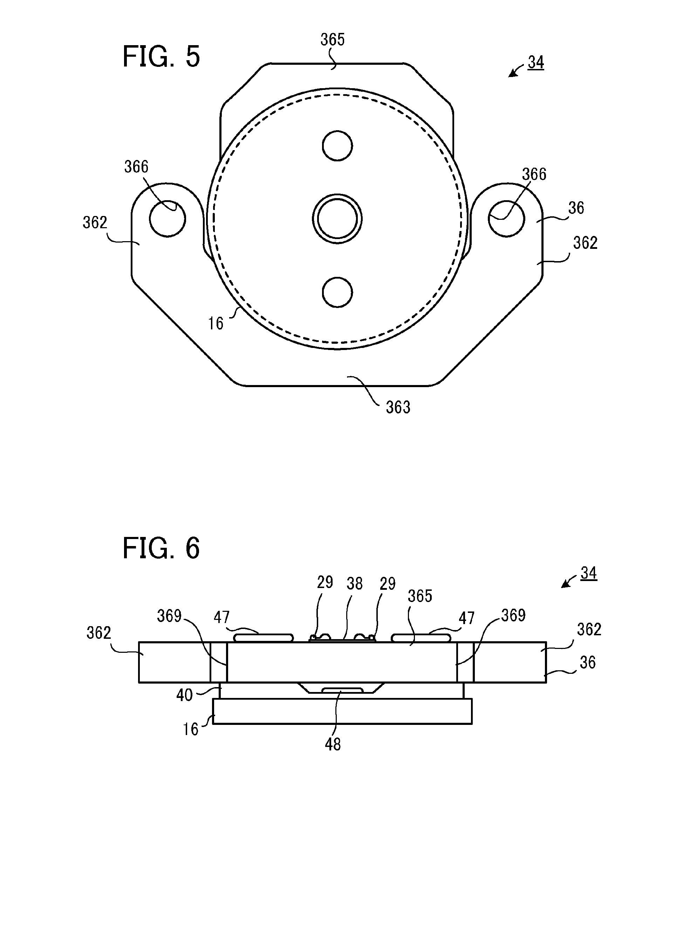

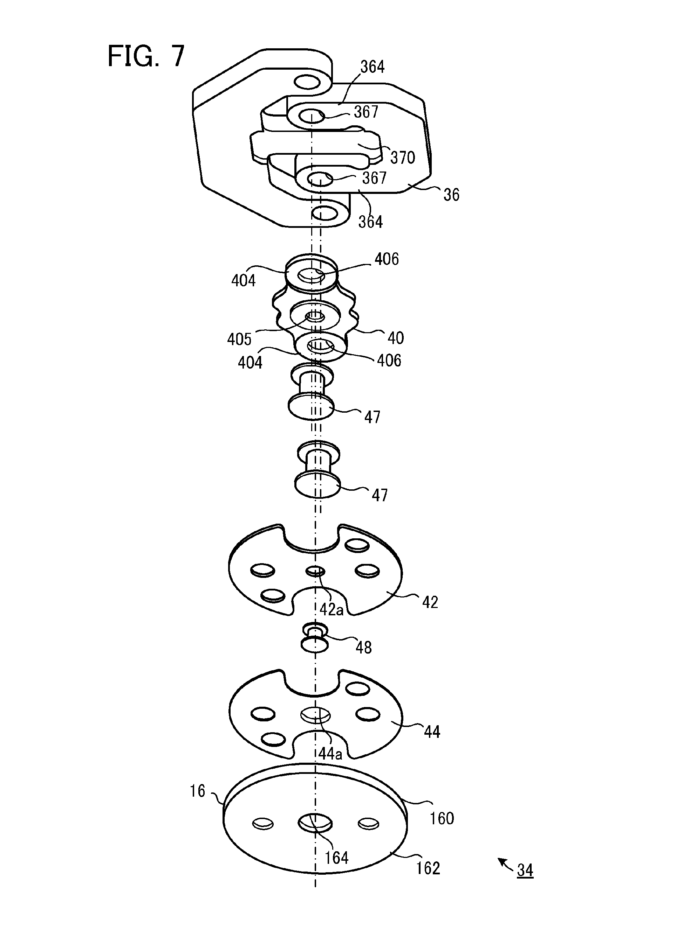

As shown in Figs. 4 to 6, each load cell 34 includes a flexure element 36 that is deformed by the load transferred from the platform 12, multiple strain gauges 38 affixed to the flexure element 36, and a leg 16 for supporting the flexure element 36. More exactly, as shown in the exploded perspective view of the load cell in Fig. 7, the load cell 34 includes the flexure element 36, a bridge 40 for supporting the flexure element 36, the leg 16 for supporting the bridge 40, and a leg reinforcer 42 for reinforcing the leg 16. As shown in Fig. 4, the cables (external cables) 29 for supplying electricity to the strain gauges 38 are adhered to the flexure element 36 by a tape 50.

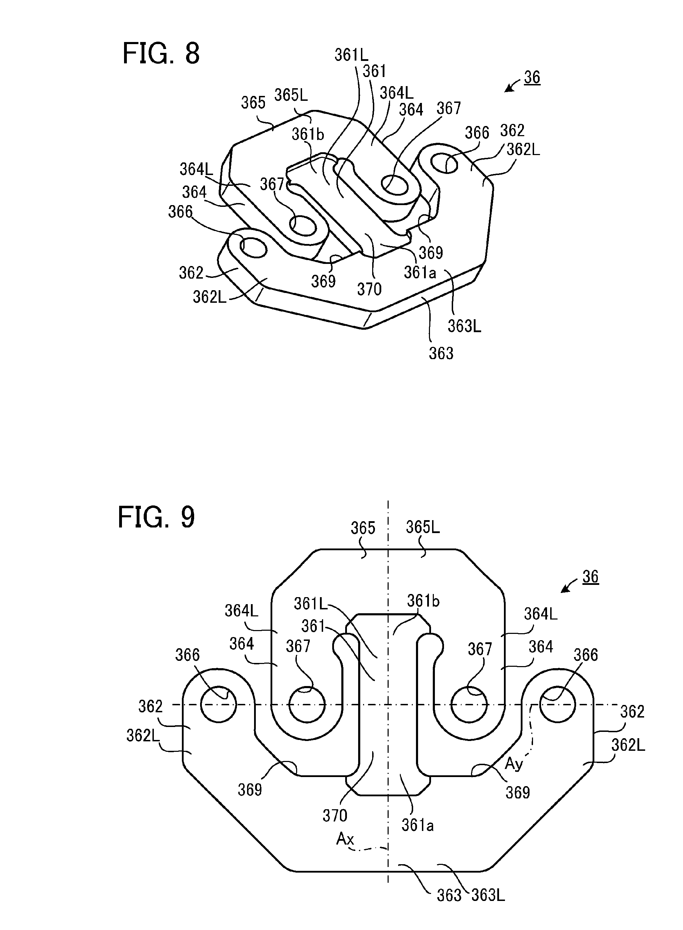

As shown in Figs. 8 to 9, the flexure element 36 is a single element having an axisymmetric shape. The flexure element 36 is formed of highly rigid material, e.g., a carbon tool steel. The flexure element 36 includes a flexure part 361 located at the center of the flexure element 36, two first arm portions 362, two second arm portions 364, a first connection portion 363 for connecting the flexure part 361 and the first arm portions 362, and a second connection portion 365 for connecting the flexure part 361 and the second arm portions 364.

The flexure part 361 is a rectangular portion extending in the same direction as that of the symmetric axis Ax of the flexure element 36, and having a first end 361a and a second end 361b. The flexure part 361 is a region that is deformed the most by the load transferred from the platform 12. The strain gauges 38 are attached to the flexure part 361 (see Fig. 4). The upper surface of the flexure part 361 is provided with marks 368 that are used for guides for attaching the strain gauges 38.

The two first arm portions 362 extend in parallel to the symmetric axis Ax of the flexure element 36. The first connection portion 363 extends in a direction perpendicularly crossing the symmetric axis Ax of the flexure element 36, and is connected to the first end 361a of the flexure part 361 and both the first arm portions 362.

The two the second arm portions 364 are arranged to be closer to the flexure part 361 than the first arm portions 362, and extend in parallel to the symmetric axis Ax of the flexure element 36. The second connection portion 365 extends in a direction perpendicularly crossing the symmetric axis Ax of the flexure element 36, and is connected to the second end 361b of the flexure part 361 and both of??? the second arm portions 364.

One end of each of the first arm portions 362 is formed in a semicircular shape, and the end is provided with a circular first through-hole 366. One end of each of the second arm portions 364 is also formed in a semi-circular shape, and the end is provided with a circular second through-hole 367. The center axes of the first through-holes 366 and the second through-holes 367 are arranged on a line Ay perpendicularly crossing the symmetric axis Ax of the flexure element 36. The flexure element 36 includes a substantially J-shaped groove 369 and substantially inversed J-shaped groove 369 at both sides of the flexure part 361. Each groove 369 is surrounded by the flexure part 361, one of the first arm portions 362, the first connection portion 363, one of the second arm portions 364, and the second connection portion 365.

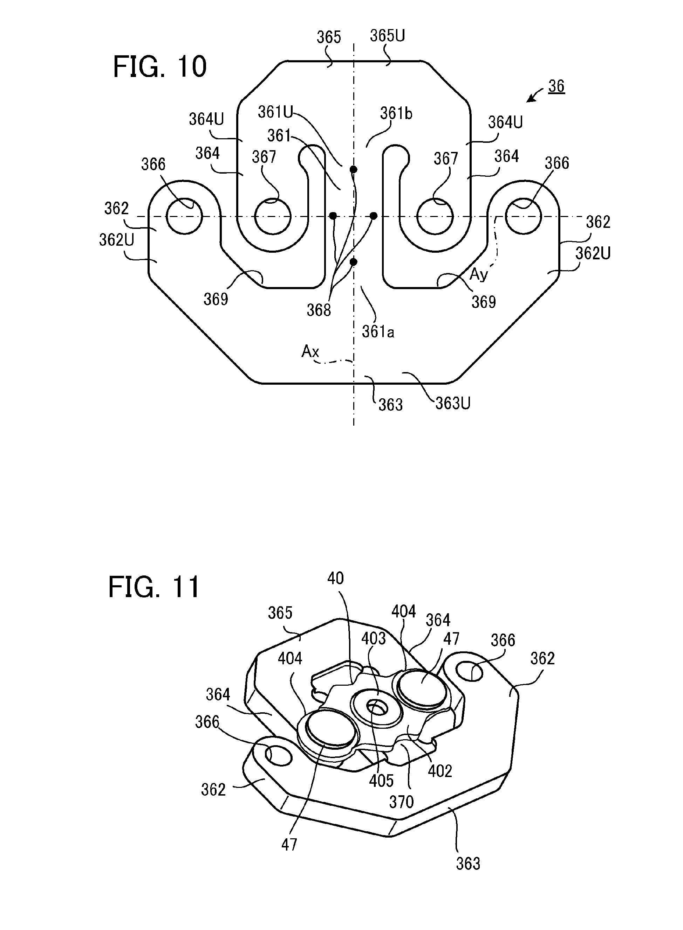

In a state in which the second arm portions 364 are supported substantially horizontally by a supporter (bridge 40 that will be described later) located below the flexure element 36, a downward vertical load is intensively applied to the first arm portions 362 lying substantially horizontally, so that the flexure part 361 is deformed (the flexure part 361 is bent into an S-shape when seen along line Ay in Figs. 9 and 10). Each of the strain gauges 38 generates a signal in response to the deformation of the flexure part 361 of the flexure element 36.

In the present embodiment, downward vertical load is intensively applied to the first arm portions 362. The second arm portions 364 are fixed to the supporter (bridge 40, which will be described later) located below the flexure element 36. Consequently, a set constituted of the two first arm portions 362 and the first connection portion 363 is a load-applied part to which load is applied, whereas another set constituted of the two second arm portions 364 and the second connection portion 365 is a supported part supported by the supporter.

The surface (upper surface) of the flexure element 36 shown in Fig. 10 is on a single plane. Consequently, the flexure part 361, the first arm portions 362, the first connection portion 363, the second arm portions 364, and the second connection portion 365 include upper surfaces 361U, 362U, 363U, 364U, and 365U that lie on the same plane.

On the other hand, as shown in Figs. 8 and 9, a recess 370 is formed in the flexure element 36 at a side opposite to the upper surfaces 361U, 362U, 363U, 364U, and 365U. The recess 370 is formed between the first connection portion 363 and the second connection portion 365, the position of the recess 370 corresponding to the flexure part 361. In the present embodiment, the recess 370 not only overlaps the flexure part 361, but also extends to a portion of the first connection portion 363 and to a portion of the second connection portion 365. The first arm portions 362, the first connection portion 363, the second arm portions 364, and the second connection portion 365 include lower surfaces 362L, 363L, 364L, and 365L that lie on the same plane. However, the lower surface 361L of the flexure part 361 is located on a plane that is different from and is in parallel to the plane on which the lower surfaces 362L, 363L, 364L, and 365L are located since the flexure part 361 has the recess 370.

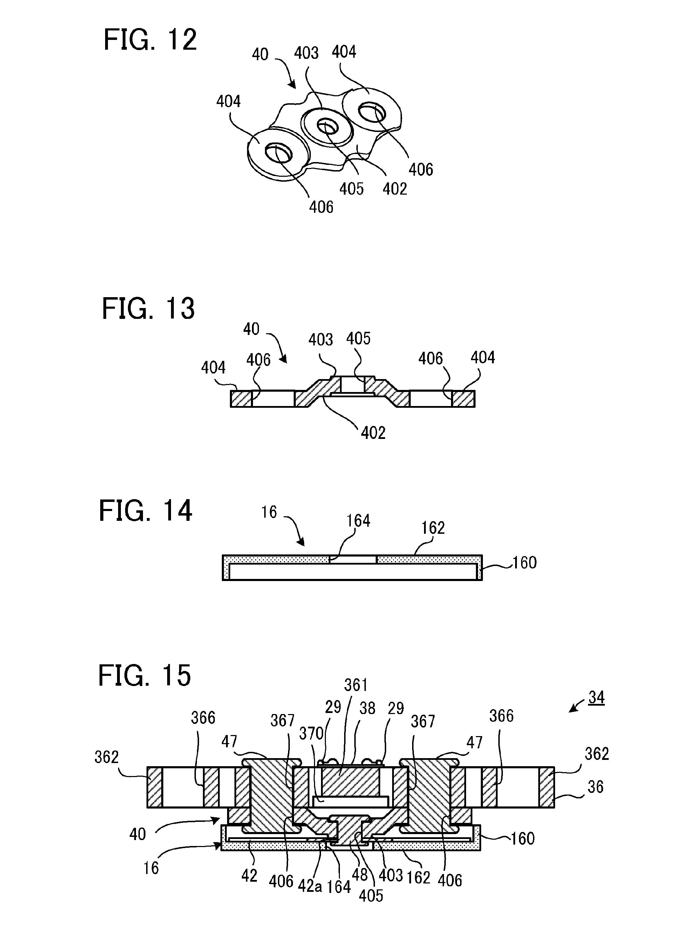

As shown in Figs. 4, 7, and 11, the flexure element 36 is fixed to and supported by the bridge 40. The bridge 40 is a single element formed of a rigid material, e.g., a steel. As shown in Figs. 12 and 13, the bridge 40 is a plate with a substantially uniform thickness, and it is of a rotationally symmetric shape. The bridge 40 includes a central portion 402 and two end portions 404. The two end portions 404 are located on the same plane that is different from the plane on which the central portion 402 is located. The plane on which the two end portions 404 are located is parallel to the plane on which the central portion 402 is located. The bridge 40 may be formed by, e.g., press working.

At the center of the central portion 402 of the bridge 40, a boss 403 of which the outline is circular, is formed. At the center of the boss 403, a through-hole 405 is formed. A through-hole 406 is also formed at each of the end portions 404 of the bridge 40.

As shown in Fig. 7, the through-holes 406 at the two end portions 404 of the bridge 40 are aligned with the second through-holes 367 at the two second arm portions 364 of the flexure element 36, respectively. A rivet 47 is passed through the through-hole 404 and the second through-hole 367. By the two rivets 47, the flexure element 36 is fixed to the bridge 40. The two end portions 404 of the bridge 40 are brought into contact with the two second arm portions 364 of the flexure element 36. However, since the recess 370 is formed at the flexure element 36 and there is a step between the two end portions 404 and the central portion 402 in the bridge 40, the central portion 402 of bridge 40 does not come into contact with the flexure element 36 even though the central portion 402 is deflected.

As shown in Figs. 7 and 14, the leg 16 has a substantially circular contour. The leg 16 includes a hollow cylindrical portion 160 and a circular-plate portion 162 connected to one end of the cylindrical portion 160. A through-hole 164 is formed at the center of the circular-plate portion 162. The leg 16 is made of a flexible material, e.g., resin or rubber.

As shown in Fig. 7, on the inner surface of the circular-plate portion 162 of the leg 16, a leg reinforcer 42 that is a substantially circular plate is adhered by a substantially circular two-sided adhesive tape 44. At the center of the two-sided adhesive tape 44, a through-hole 44a is formed, whereas a through-hole 42a is also formed at the center of the leg reinforcer 42. The leg reinforcer 42 is formed of a rigid metal, e.g., a steel, in order to reinforce the leg 16, which is made of a flexible material.

A rivet 48 is passed through the through-hole 42a of the leg reinforcer 42 and the through-hole 405 of the bridge 40. By the rivet 48, the leg reinforcer 42 is fixed to the bridge 40. Since the leg reinforcer 42 is fixed to the leg 16 by the two-sided adhesive tape 44, the bridge 40 is fixed to the leg 16. A head of the rivet 48 is located within the through-hole 44a of the two-sided adhesive tape 44 and the through-hole 164 of the leg 16.

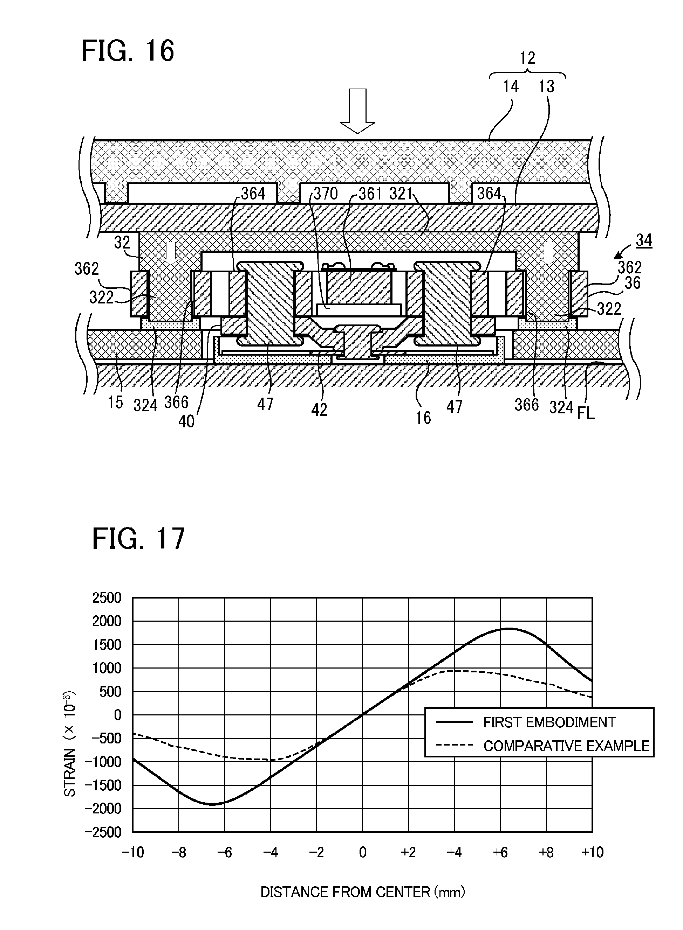

Thus, the load cell 34 shown in the cross-sectional view of Fig. 15 is constituted. Fig. 16 is a cross-sectional view of the circumference of a load cell 34 of the weight measuring device 1. In Fig. 16, the arrow indicates the load. The load applied to the outer cover 14 of the platform 12 is transmitted, through the inner cover 13 and a load transferring member 32, to the first arm portions 362 of the flexure element 36 lying substantially horizontally. Then, the load is transmitted from the second arm portions 364 of the flexure element 36 lying substantially horizontally, through the bridge 40, to the leg reinforcer 42 and the leg 16, and is received by the floor FL.

The load transferring member 32 includes an upper wall 321 being in contact with the inner cover 13 of the platform 12, and multiple projections 322. The projections 322 are inserted into the first through-holes 366 of the first arm portions 362 of the flexure element 36. The lower end of each projection 322 protrudes from the first through-hole 366, and is engaged in a cap 324 placed on the base 15.

Accordingly, the load applied to the load transferring member 32 is also transmitted to the base 15. However, the legs 16 are not fixed to the base 15 or the platform 12 and are independent from the base 15 and the platform 12, and the base 15 and the platform 12 are displaced with respect to the legs 16. Therefore, the flexure elements 36 interposed between the legs 16 and the platform 12 are deformed depending on the load applied from the platform 12 to the flexure elements 36 and the force applied from the floor on which the legs 16 are placed to the flexure elements 36.

In the present embodiment, the load-applied part (the first arm portions 362 and the first connection portion 363), the supported part (the second arm portions 364 and the second connection portion 365), and the flexure part 361 has the upper surfaces 362U, 363U, 364U, 365U, and 361U that are on the same plane, and the recess 370 corresponding to the flexure part 361 is formed at the side opposite to the upper surfaces 362U, 363U, 364U, 365U, and 361U and at the location between the load-applied part (the first arm portions 362 and the first connection portion 363) and the supported part (the second arm portions 364 and the second connection portion 365). Therefore, the recess 370 is formed at one side of the flexure element 36, thereby reducing the thickness of the flexure part 361 to less than the thickness of the load-applied part and the thickness of the supported part.

By reducing the thickness of the flexure part 361 to less than that of other parts, the second moment of area of the flexure part 361 can be reduced (the bending rigidity can be reduced) and the flexure part 361 can be bent more easily by a load. Therefore, deviation in locations of multiple strain gauges 38 on the flexure part 361 will not significantly affect the measurement accuracy, so that the weight measurement can be achieved with higher accuracy. Fig. 17 is a graph showing distribution of strain when weight measurement is conducted with the use of the flexure element 36 of the first embodiment and with the use of a comparative flexure element. Here, the comparative flexure element is a flexure element that has the same contour as that of the flexure element 36 of the first embodiment, but has a uniform thickness without having the recess 370. The abscissa of Fig. 17 designates the distance from the line Ay (center) on the symmetric axis Ax of the flexure element 36 in Figs. 9 and 10. Whereas the sign "+" denotes the side of the second connection portion 365, the sign "-" denotes the side of the first connection portion 363. The ordinate designates the strain actually occurring at the flexure element. Whereas the solid line indicates the distribution of strain at the flexure element 36 of the first embodiment, the broken line indicates the distribution of strain at the comparative flexure element. The distributions of strain were obtained by a computer simulation provided that a single load is given to the flexure element. The length of the flexure part 361 in the direction of the symmetric axis Ax was 13 mm, and the length of the recess 370 in the direction of the symmetric axis Ax was 16.5 mm.

As will be apparent from Fig. 17, regarding the comparative example, the distribution of strain was described by a straight line only within a narrow range. Therefore, even though the interval between the two strain gauges 38 is maintained to be a predetermined interval, a significant measurement error will occur if the locations of the strain gauges 38 mounted on the flexure part 361 are misaligned from ideal locations. For example, if both strain gauges 38 are located within a range defined by the distance about 1.5 mm from the center, the difference between the outputs of both strain gauges of which the interval is maintained is constant, and therefore deviation in location will not significantly affect the measurement accuracy. Otherwise, the difference between the outputs of both strain gauges is not constant, so that misallocation will significantly affect the measurement accuracy. On the other hand, regarding the flexure element 36 of the first embodiment, the distribution of strain was described by a straight line over a wider range. Therefore, as long as the interval between the two strain gauges 38 is maintained to be a predetermined interval, a significant measurement error will not occur even if the locations of the strain gauges 38 mounted on the flexure part 361 are misaligned from ideal locations. For example, if both strain gauges 38 are located within a range defined by the distance about 6 mm from the center, the difference between the outputs of both strain gauges of which the interval is maintained is constant, and therefore deviation in locations will not significantly affect the measurement accuracy.

When the bending rigidity of the flexure part 361 is high, it is impossible to avoid increasing the thickness and the width of the load-applied part (the first arm portions 362 and the first connection portion 363) and the supported part (the second arm portions 364 and the second connection portion 365) in relation to those of the flexure part 361 in order to increase the deformation of the flexure part 361. However, in the present embodiment, by reducing the thickness of the flexure part 361 to less than that of other parts, the bending rigidity of the flexure part 361 is reduced. Therefore, the thickness and the width of the load-applied part and the supported part can be relatively reduced. Furthermore, by reducing the thickness of the flexure part 361 to less than that of other parts, it is possible to minimize influence from the load-applied part (the first arm portions 362 and the first connection portion 363) and the supported part (the second arm portions 364 and the second connection portion 365) to the strain exerted in the flexure part 361.

In the present embodiment, since the recess 370 is formed at only one side of the flexure part 361 of the flexure element 36, the production cost of the flexure element can be lower in comparison with the structure in which a recess is formed at each of both sides of a flexure element for thinning the flexure part. In particular, since the flexure element 36 has a complicated shape, in comparison with the structure in which a recess is formed at each of both sides of a flexure element for thinning the flexure part, the production cost of the flexure element can be remarkably reduced. For example, if the recess is formed by cutting work, the production process involved in forming the single side recess is easier than that for forming the recesses at both sides of the flexure part, and failure of the production for forming the single side recess is less than that for forming the recesses at both sides of the flexure part. Alternatively, if the flexure element is manufactured with the use of a mold, failure of the production for forming the single side recess is less than that for forming the recesses at both sides of the flexure part since the material easily spreads into the every part within the mold for the single side recess.

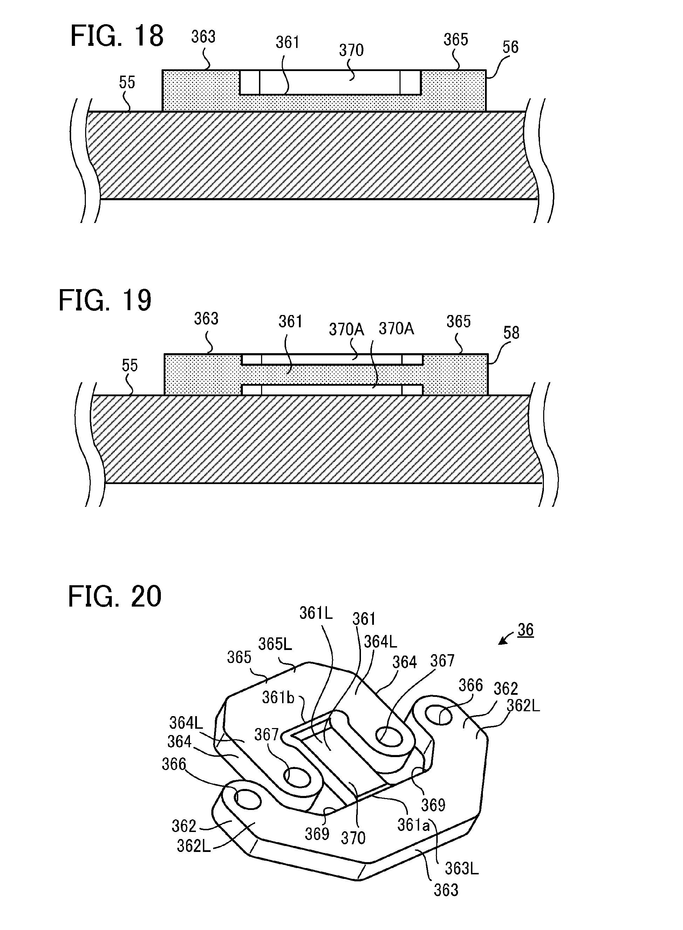

Furthermore, an advantage of the present embodiment when the flexure element is manufactured by powdered metallurgy will be described with reference to Figs. 18 and 19. In powdered metallurgy, after molding a metallic powder by use of a mold, the material block of the metallic powder resulting from the molding process is placed on a stage called a "setter", and the block is sintered. In Figs. 18 and 19, reference sign 55 denotes the setter. Reference sign 56 denotes the material block of the metallic powder resulting from the molding process that is the material of the flexure element 36 of the first embodiment, whereas reference sign 58 denotes another material block of the metallic powder resulting from the molding process that is the material of another flexure element having recesses 370A at both sides of the flexure part 361.

In the comparison example shown in Fig. 19, the lower surface of the flexure part 361 of the material block 58 is not brought into contact with the upper surface of the setter 55 since the lower surface of the flexure part 361 has one of the recesses 370A. The same is true even if the material block 58 is upset. If the material block 58 is sintered in this state, the flexure part 361 is deformed by its own weight during the sintering, so that the production fails. In the first embodiment shown in Fig. 18, the flexure part 361 of the material block 56 can be brought into contact with the upper surface of the setter 55 in a manner similar to the first connection portion 363 and the second connection portion 365. Consequently, the block of the metallic powder that is the material of the flexure element 36 can be deployed in such a manner that the surfaces of the load-applied part, the supported part, and the flexure part that are opposite to the recess 370 can be brought into contact with the flat upper surface of the setter 55. When the material block 56 is sintered in this state, the flexure part 361 is less likely to be deformed in a manner similar to other parts since the flexure part 361 is supported by the setter 55, so that failure of production is less likely.

Furthermore, in the present embodiment, by providing the recess 370 to the flexure part 361 and by reducing the thickness of the flexure part 361 to less than that of other parts, the load cell 34 that includes the flexure element 36 can be made thinner. As shown in Figs. 7, 12, and 13, the step is formed between the two end portions 404 and the central portion 402 in the bridge 40, and the cross-sectional views in Figs. 15 and 16 show the step of the bridge 40. If the recess 370 is not formed, it is necessary to enlarge the step of the bridge 40 in order to prevent the flexure part 361 of the flexure element 36 from being brought into contact with the bridge 40 or the rivet 48 and in order to prevent load from being transmitted from the flexure part 361 to the bridge 40 or the rivet 48. In the present embodiment, since the recess 370 is formed at the side of the flexure part 361 that is closer to the bridge 40, the step of the bridge 40 can be minimized, and thus the load cell 34 can be made thinner.

If the deformation amount of the flexure part 361 of the flexure element 36 is small, it is unnecessary to form the step between the end portions 404 and the central portion 402 in the bridge 40. For example, if the upper limit of weights that can be measured by the weight measuring device of the present embodiment is restricted to be low, the deformation amount of the flexure part 361 will be small, and it is less likely that the flexure part 361 will come into contact with the bridge 40 or the rivet 48, so that load is transferred from the flexure part 361 to the bridge 40 or the rivet 48. If the bridge 40 is made thinner, the load cell 34 may be further thinner.

It is preferable that flexure element 36 be formed by powdered metallurgy. Forming the flexure element 36 by powdered metallurgy contributes to a decrease in the size of the flexure element 36 and ensures the mechanical strength of the flexure element 36 in comparison with punching. Furthermore, since the accuracy in the thickness and the width of the flexure element 36 is high when powdered metallurgy is used, the weight measurement accuracy of the load cell is improved. In addition, if the flexure element 36 is made by punching, the recess 370 should be formed by cutting work since the recess 370 cannot be formed by punching. However, according to powdered metallurgy, the flexure element 36 including the recess 370 can be manufactured easily. The method for powdered metallurgy may be press-molding and sintering a metallic powder or metal injection molding (MIM).

### SECOND EMBODIMENT

Fig. 20 is a perspective view showing a flexure element 36 according to a second embodiment of the present invention obliquely viewed from below. In Fig. 20, the same reference symbols are used to identify the elements that are the same as those in the first embodiment. Although not shown in Fig. 20, in a manner similar to the first embodiment, the flexure part 361, the first arm portions 362, the first connection portion 363, the second arm portions 364, and the second connection portion 365 include upper surfaces 361U, 362U, 363U, 364U, and 365U that lie on the same plane (The plan view of the second embodiment is the same as Fig. 10).

In the flexure element 36 of the first embodiment, recess 370 not only overlaps the flexure part 361, but also extends to a portion of the first connection portion 363 and to a portion of the second connection portion 365 (see Figs. 8 and 9). In the flexure element 36 of the second embodiment shown in Fig. 20, the recess 370 only overlaps the range of the flexure part 361, and does not extend to the first connection portion 363 or the second connection portion 365. Therefore, the first connection portion 363 and the second connection portion 365 have a uniform thickness.

The flexure element 36 of the present embodiment is used for a load cell and a weight measuring device in a manner similar to the flexure element 36 of the first embodiment, and it has the same advantages as those of the first embodiment. It is preferable that the flexure element 36 of the present embodiment be formed by powdered metallurgy in a manner similar to the flexure element 36 of the first embodiment.

### THIRD EMBODIMENT

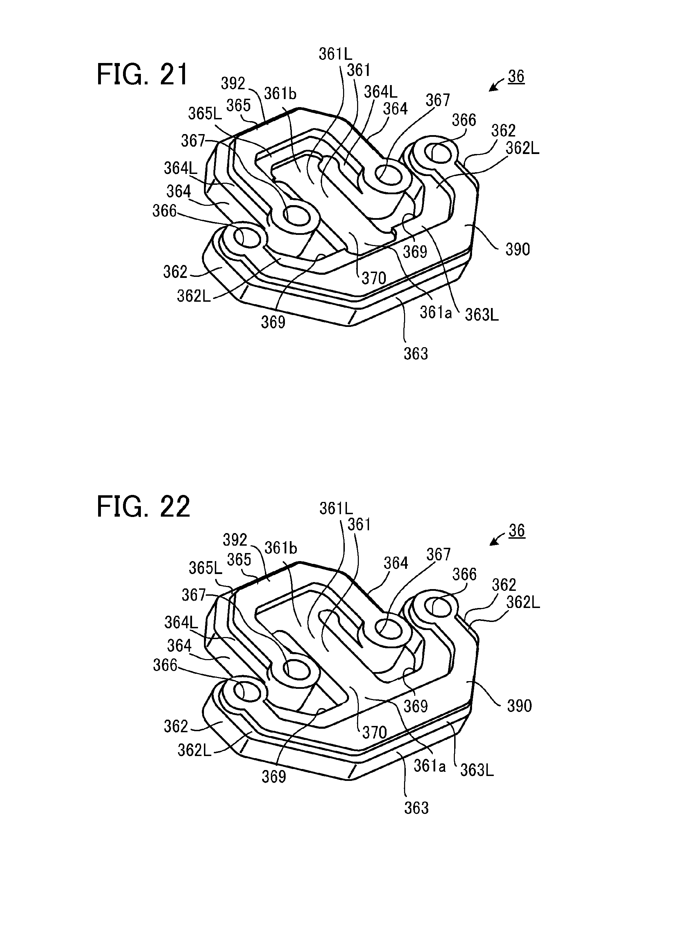

Fig. 21 is a perspective view showing a flexure element 36 according to a third embodiment of the present invention obliquely viewed from below. In Fig. 21, the same reference symbols are used to identify the elements that are the same as those in the first embodiment. Although not shown in Fig. 21, in a manner similar to the first embodiment, the flexure part 361, the first arm portions 362, the first connection portion 363, the second arm portions 364, and the second connection portion 365 include upper surfaces 361U, 362U, 363U, 364U, and 365U that lie on the same plane (The plan view of the third embodiment is the same as Fig. 10).

In the third embodiment, the load-applied part of the flexure element 36 (the first arm portions 362 and the first connection portion 363) includes a rib (large-thickness portion) 390 at the lower surfaces 362L and 363L. The supported part (the second arm portions 364 and the second connection portion 365) also includes a rib (large-thickness portion) 392 at the lower surfaces 364L and 365L.

The flexure element 36 of the present embodiment is used for a load cell and a weight measuring device in a manner similar to the flexure element 36 of the first embodiment, and it has the same advantages as those of the first embodiment. It is preferable that the flexure element 36 of the present embodiment be formed by powdered metallurgy in a manner similar to the flexure element 36 of the first embodiment. In the present embodiment, the ribs 390 and 392 enhance bending rigidity of the load-applied part and the supported part. Therefore, the flexure part 361 is more flexible relatively.

### FOURTH EMBODIMENT

Fig. 22 is a perspective view showing a flexure element 36 according to a fourth embodiment of the present invention obliquely viewed from below. In Fig. 22, the same reference symbols are used to identify the elements that are the same as those in the third embodiment. Although not shown in Fig. 22, in a manner similar to the first embodiment, the flexure part 361, the first arm portions 362, the first connection portion 363, the second arm portions 364, and the second connection portion 365 include upper surfaces 361U, 362U, 363U, 364U, and 365U that lie on the same plane (The plan view of the fourth embodiment is the same as Fig. 10). In a manner similar to the third embodiment, ribs 390 and 392 are formed in the flexure element 36.

The flexure element 36 of the present embodiment is used for a load cell and a weight measuring device in a manner similar to the flexure element 36 of the first embodiment, and it has the same advantages as those of the first embodiment. It is preferable that the flexure element 36 of the present embodiment be formed by powdered metallurgy in a manner similar to the flexure element 36 of the first embodiment. In the present embodiment, the ribs 390 and 392 enhance bending rigidity of the load-applied part and the supported part. Therefore, the flexure part 361 is relatively more flexible.

In the present embodiment, the recess 370 is defined by the ribs 390 and 392. That is to say, the recess 370 is surrounded by the ribs 390 and 392, and the recess 370 extends to the first arm portions 362 and to the second arm portions 364. The flexure element 36 including the flexure part 361 has a uniform thickness, except for the ribs 390 and 392. Therefore, in contrast to the third embodiment shown in Fig. 21, it is not necessary to form a further difference in level (i.e., a step) for the recess 370 in the present embodiment.

### FIFTH EMBODIMENT

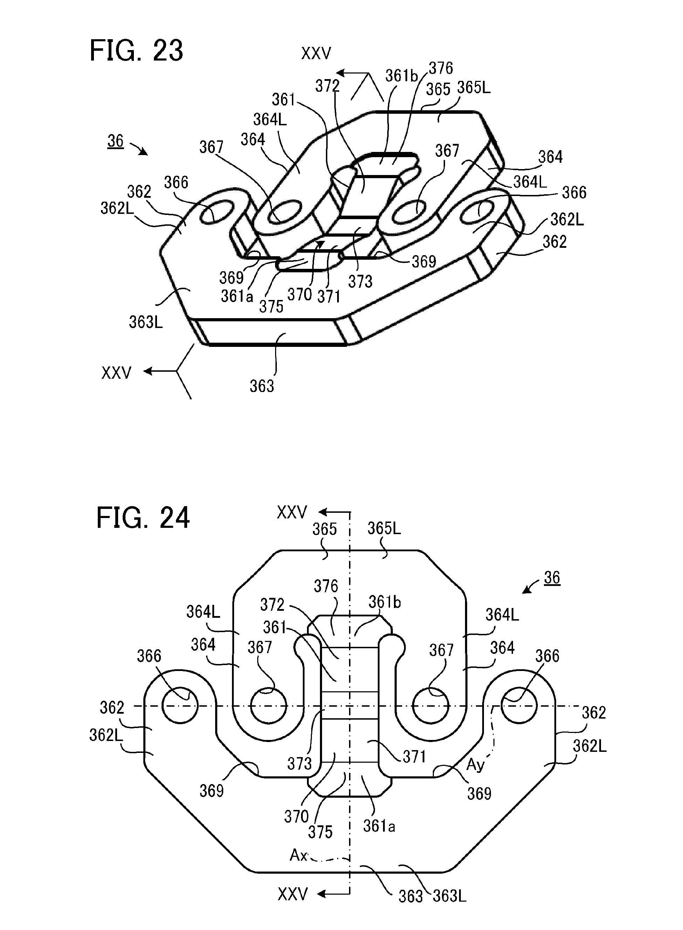

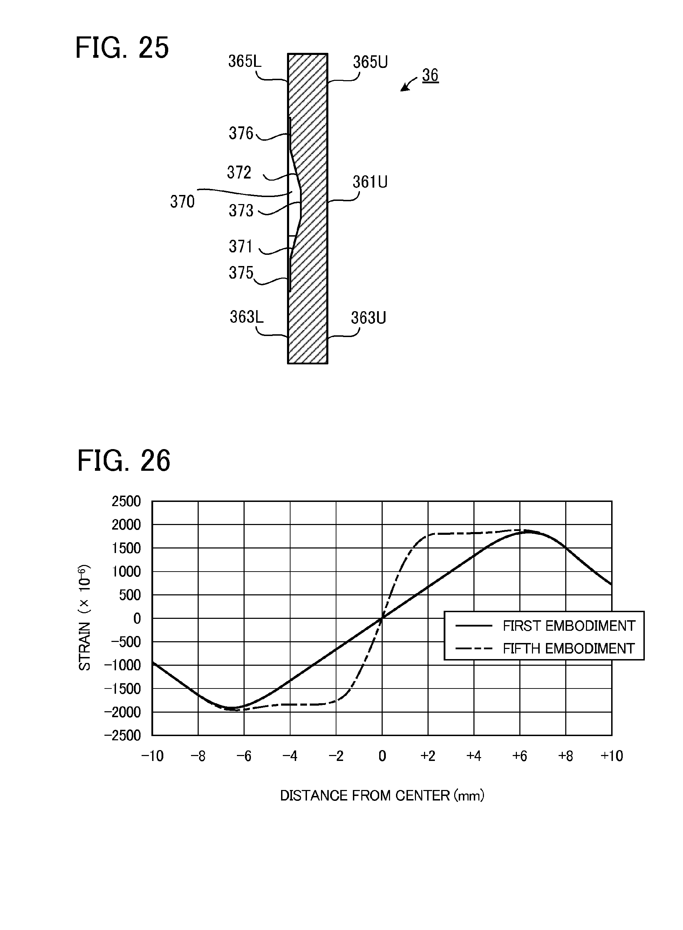

Fig. 23 is a perspective view showing a flexure element 36 according to a fifth embodiment of the present invention obliquely viewed from below. Fig. 24 is a bottom view showing the flexure element 36. Fig. 25 is a cross-sectional view taken along line XXV-XXV in Figs. 23 and 24. In Figs. 23-25, the same reference symbols are used to identify the elements that are the same as those in the first embodiment. Although not shown in Figs. 23 and 24, in a manner similar to the first embodiment, the flexure part 361, the first arm portions 362, the first connection portion 363, the second arm portions 364, and the second connection portion 365 include upper surfaces 361U, 362U, 363U, 364U, and 365U that lie on the same plane (The plan view of the fifth embodiment is the same as Fig. 10).

A recess 370 is formed at one side of the flexure element 36. In the present embodiment, the recess 370 is constituted of a first inclined surface 371, a second inclined surface 372, a central horizontal surface 373, an end horizontal surface 375, and an end horizontal surface 376. The recess 370 not only overlaps the flexure part 361, but also extends to a portion of the first connection portion 363 and to a portion of the second connection portion 365. The central horizontal surface 373 is arranged at the center of the recess 370 (the center in the direction of the symmetric axis Ax of the flexure part 361). The end horizontal surface 375 includes the first end 361a of the flexure part 361, whereas the end horizontal surface 376 includes the second end 361b of the flexure part 361. One end of the first inclined surface 371 is connected to the central horizontal surface 373, whereas the other end of the first inclined surface 371 is connected to the end horizontal surface 375. One end of the second inclined surface 372 is connected to the central horizontal surface 373, whereas the other end of the second inclined surface 372 is connected to the end horizontal surface 376. The central horizontal surface 373 and the end horizontal surfaces 375 and 376 are in parallel to the lower surfaces 362L, 363L, 364L, and 365L.

The first inclined surface 371 and the end horizontal surface 375 are arranged to be closer to the first connection portion 363 than the central horizontal surface 373, whereas the second inclined surface 372 and the end horizontal surface 376 are arranged to be closer to the second connection portion 365 than the central horizontal surface 373. The first inclined surface 371 is inclined such that the closer to the first connection portion 363 that is the load-applied part, the closer to the lower surface 363L of the first connection portion 363. In other words, the first inclined surface 371 is inclined such that the closer to the first connection portion 363 that is the load-applied part, the farther away from the upper surface 363U of the first connection portion 363. The second inclined surface 372 is inclined such that the closer to the second connection portion 365 that is the supported part, the closer to the lower surface 365L of the second connection portion 365. In other words, the second inclined surface 372 is inclined such that the closer to the second connection portion 365 that is the supported part, the farther away from the upper surface 365U of the second connection portion 365.

By providing such a first inclined surface 371 and such a second inclined surface 372 in the recess 370, the flexure part 361 has sections in which change in strain occurring by load is small (the sections correspond to the first inclined surface 371 and the second inclined surface 372). By arranging the strain gauges 38 at the sections, the measurement error that may be caused by deviation in locations of the strain gauges 38 can be reduced. This advantage will be described below.

Fig. 26 is a graph showing distribution of strain when weight measurement is conducted with the use of the flexure element 36 of the first embodiment and with the use of the flexure element 36 of the fifth embodiment. The abscissa of Fig. 26 designates the distance from the line Ay (center) on the symmetric axis Ax of the flexure element 36 in Figs. 9, 10, and 24. Whereas the sign "+" denotes the side of the second connection portion 365, the sign "-" denotes the side of the first connection portion 363. The ordinate designates the strain actually occurring at the flexure element. Whereas the solid line indicates the distribution of strain at the flexure element 36 of the first embodiment, the dashed line indicates the distribution of strain at the flexure element 36 of the fifth embodiment. The distributions of strain were obtained by a computer simulation provided that a single load is given to the flexure element. The flexure element 36 of the first embodiment and the flexure element 36 of the fifth embodiment have the same dimensions and the same shape, except for the specific shape of the recess 370. The length of the flexure part 361 in the direction of the symmetric axis Ax was 13 mm, and the length of the recess 370 in the direction of the symmetric axis Ax was 16.5 mm.

As will be apparent from Fig. 26, regarding the flexure element 36 of the first embodiment, the distribution of strain was described by a straight line over a wider range. On the other hand, regarding the flexure element 36 of the fifth embodiment, the distribution of strain was described by a straight line within a narrower range. Regarding the flexure element 36 of the fifth embodiment, the strain reaches almost the maximum or minimum at points to which the distance from the center is about 2 mm, and is constant in a range in which the distance from the center is about 2 mm to 6 mm. By arranging the strain gauges 38 at the sections in which change in strain occurring by load is small (i.e., the sections to which the distance from the center is about 2 mm to 6 mm), the measurement error that may be caused by deviation in locations of the strain gauges 38 can be reduced.

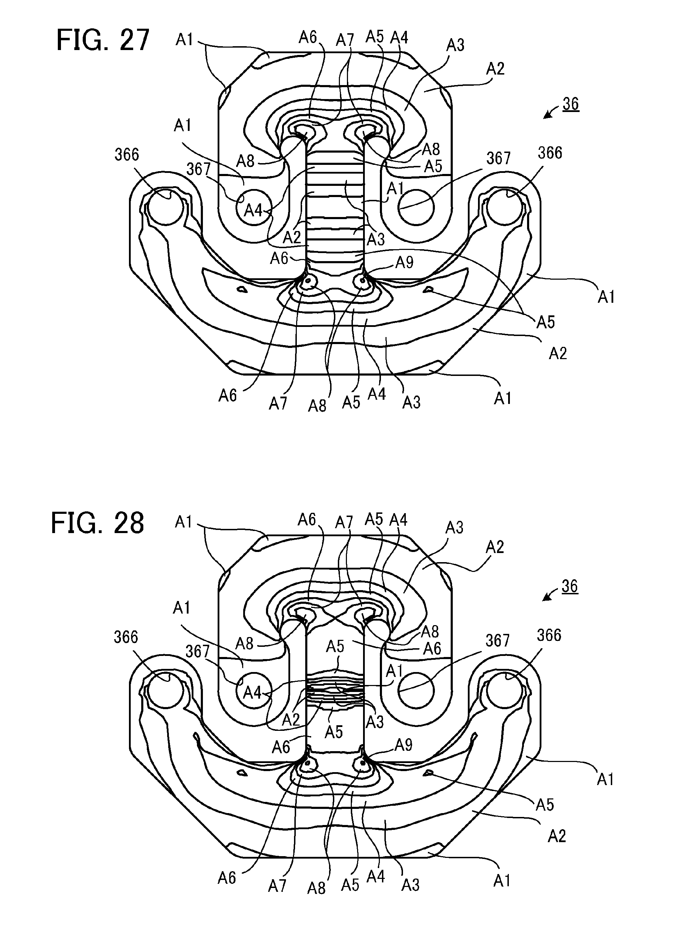

Fig. 27 is a view showing distribution of stress occurring in the flexure element 36 of the first embodiment when weight measurement is conducted, whereas Fig. 28 is a view showing distribution of stress occurring in the flexure element 36 of the fifth embodiment when weight measurement is conducted. The distributions of stress were obtained by a computer simulation. Regions A1 were regions of the minimum stress, whereas regions A9 were regions of the maximum stress. As the number associated with the region A decreases, the amount of the generated stress is small. The distributions of stress are equivalent to distributions of strain. In both flexure elements, the distributions of stress were bilaterally symmetric.

As shown in Figs. 27 and 28, there was one of regions A1 at the center of the flexure parts 361 of each flexure element 36, and regions A2, A3, A4, and A5 were aligned at substantially regular intervals along the symmetric axis of the flexure element 36. The intervals in Fig. 27 were wider than those in Fig. 28. Therefore, regarding the flexure element 36 of the first embodiment, the distribution of strain was described by a straight line over a wider range (Fig. 26). In Fig. 28, the regions A6 were widespread. Therefore, in the fifth embodiment, change in strain was small at sections distant, to some degree, from the center. The regions A6 in which change in stress (change in strain) is small correspond to the first inclined surface 371 and the second inclined surface 372.

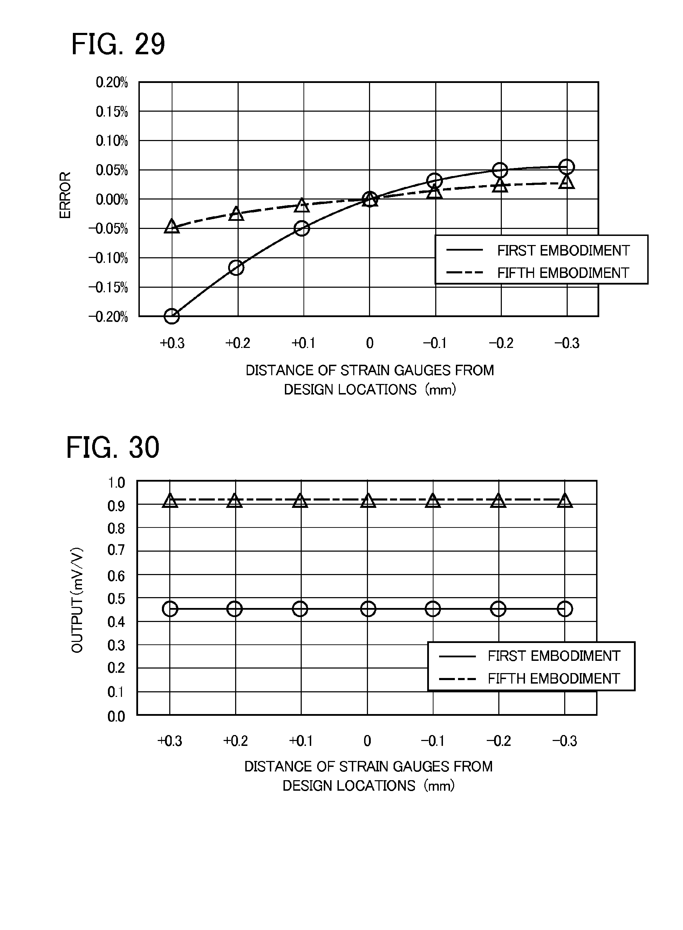

Fig. 29 is a graph showing a relationship between locations of strain gauges 38 and measurement errors when weight measurement is conducted with the use of the flexure element 36 of the first embodiment and with the use of the flexure element 36 of the fifth embodiment. Fig. 30 is a graph showing a relationship between locations of strain gauges 38 and outputs of strain gauges 38 according to the flexure element 36 of the first embodiment and the flexure element 36. The abscissa of each of Figs. 29 and 30 designates the distance of the two strain gauges 38 from design locations in the direction of the symmetric axis Ax. In the design, two strain gauges 38 should be located on the symmetric axis Ax of the flexure element 36, and the center of a strain gauge 38 should be located at a position different from the line Ay (center) by + 2.7 mm, whereas the center of the other strain gauge 38 should be located at a position different from the line Ay (center) by -2.7 mm. Whereas the sign "+" denotes the side of the second connection portion 365, the sign "-" denotes the side of the first connection portion 363.

The ordinate of Fig. 29 designates the error in the weight measured by the two strain gauges 38. As will be apparent from Fig. 29, in both flexure elements 36, the more different the two strain gauges 38 from the design locations, the greater the error. However, in the flexure element 36 of the fifth embodiment, deviations in locations did not significantly affect the measurement error. This is because, in the fifth embodiment, change in strain is small at sections distant, to some degree, from the center.

The ordinate of Fig. 30 designates the output obtained from the two strain gauges 38. The output in the fifth embodiment was about double of the output in the first embodiment. This is because, in the fifth embodiment, the strain reaches almost the maximum or minimum at points to which the distance from the center is about 2 mm (see Fig. 26).

Therefore, it will be understood that more advantages are accomplished by the fifth embodiment than the first embodiment.

The flexure element 36 of the present embodiment is used for a load cell and a weight measuring device in a manner similar to the flexure element 36 of the first embodiment, and it yields the same advantages as those of the first embodiment. It is preferable that the flexure element 36 of the present embodiment be formed by powdered metallurgy in a manner similar to the flexure element 36 of the first embodiment.

The recess 370 that have inclined surfaces 371 and 372 according to the fifth embodiment may be applied into the recess 370 in the second embodiment (Fig. 20), the third embodiment (Fig. 21), or the fourth embodiment (Fig. 22). In other words, the recess 370 of one of the second to the fourth embodiments may be modified to have inclined surfaces 371 and 372.

### VARIATIONS WITH RESPECT TO EXTERNAL CABLES

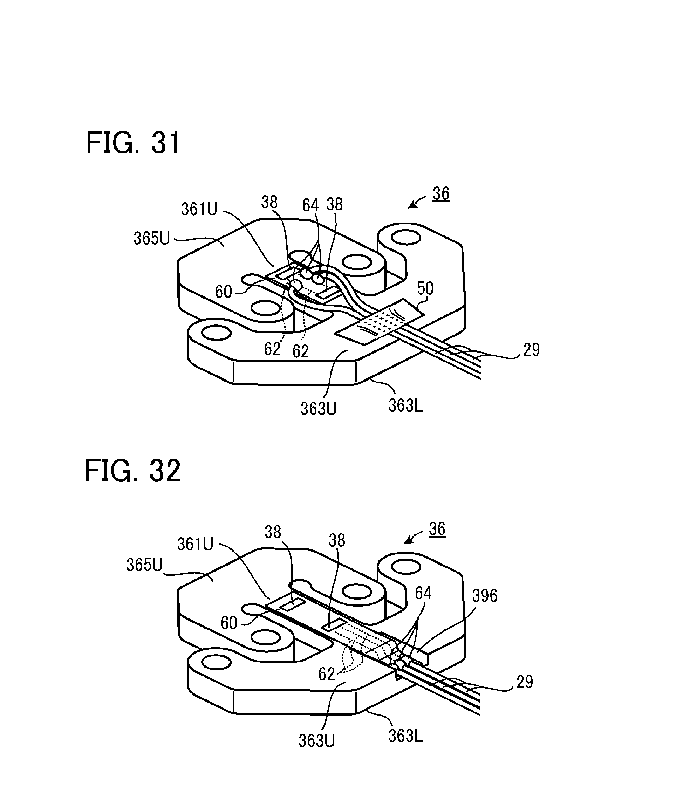

Fig. 31 is a perspective view showing the flexure element 36 with cables (external cables) 29 in the first embodiment. The two strain gauges 38 are provided at a flexible substrate 60 that includes internal wiring 62 for supplying electricity to the strain gauges 38. The flexible substrate 60 including the strain gauges 38 is adhered to the upper surface 3 6 1 U of the flexure part 361 of the flexure element 36. In the first embodiment, the flexible substrate 60 is adhered only to the flexure part 361, and does not extend to cover the first connection portion 363 or the second connection portion 365.

An end of each cable 29 is connected to the internal wiring 62 of the flexible substrate 60 on the flexure part 361. Reference sign 64 denotes an electrical connection part of one of the cables 29 and the internal wiring 62. The cables 29 and the internal wiring 62 are connected by, for example, solder. The cables 29 extend from the flexure part 361 through the first connection portion 363, and are fixed on the upper surface 363U of the first connection portion 363 by a tape 50. The cable 29 may extend from the flexure part 361 through the second connection portion 365. In either case, since the cables 29 and the electrical connection parts 64 are located on the flexure element 36, the entire thickness of the load cell 34 may be disadvantageously large.

In the second to the fifth embodiments, the cables 29 are connected to the internal wiring 62 of the flexible substrate 60 in the manner shown in Fig. 31.

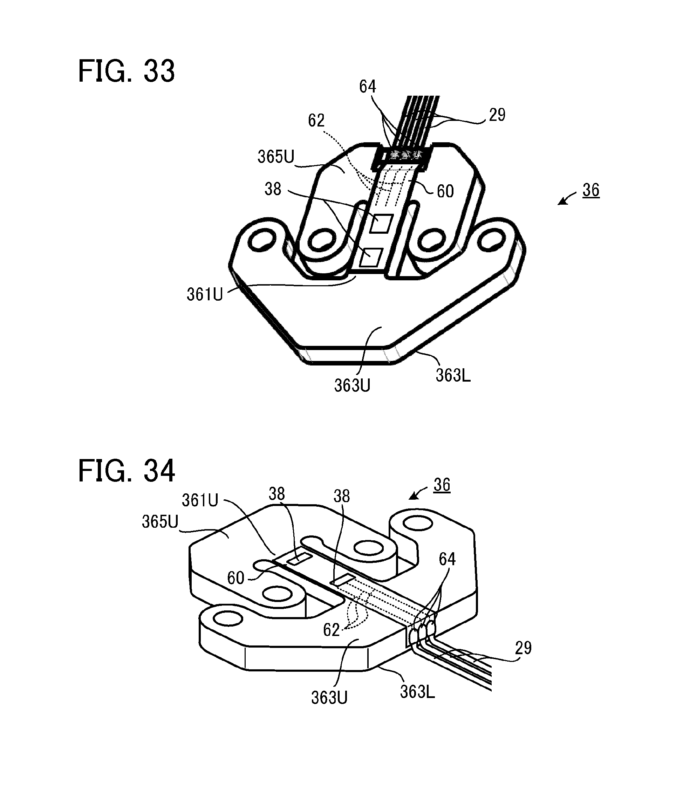

Fig. 32 is a perspective view showing a flexure element 36 with cables 29 according to a variation of the first embodiment. In this variation, the flexible substrate 60 extends from the flexure part 361 to the first connection portion 363 that is the load-applied part, the internal wiring 62 of the flexible substrate 60 is connected to cables 29 at a section in the first connection portion 363, the section being within the thickness range of the first connection portion 363. More specifically, a recess 396 is formed at an edge of the upper surface 363U of the first connection portion 363, and the flexible substrate 60 terminates at the recess 396. The internal wiring 62 of the flexible substrate 60 is connected to the cables 29 inside the recess 396. As shown in Fig. 33, a recess may be formed at an edge of the upper surface 365U of the second connection portion 365 that is the supported part, the flexible substrate 60 may terminate at the recess, and the internal wiring 62 of the flexible substrate 60 may be connected to the cables 29 inside the recess. Since the internal wiring 62 of the flexible substrate 60 is connected to the cables 29 within the thickness range of the load-applied part or the supported part in the load-applied part or the supported part, the electrical connection parts 64 do not protrude from the load-applied part or the supported part along the thickness direction. Therefore, the load cell can be made thinner.

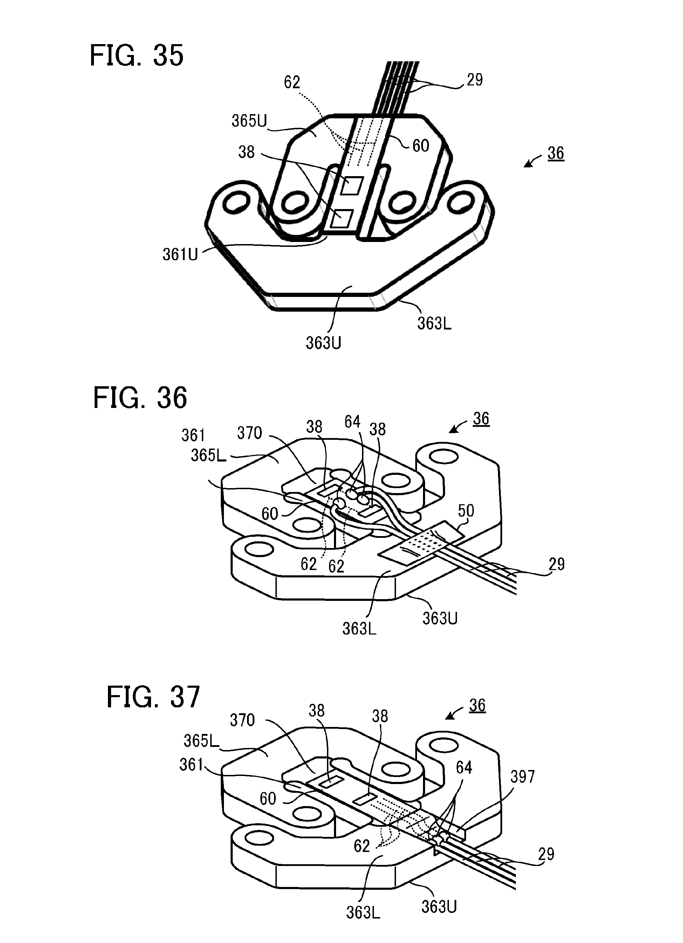

Fig. 34 is a perspective view showing a flexure element 36 with cables 29 according to another variation of the first embodiment. In this variation, the flexible substrate 60 terminates at an end surface of the first connection portion 363. The internal wiring 62 of the flexible substrate 60 is connected to the cables 29 at the end surface of the first connection portion 363. As shown in Fig. 35, the flexible substrate 60 may terminate at an end surface of the second connection portion 365 that is the supported part, and the internal wiring 62 of the flexible substrate 60 may be connected to the cables 29 at the end surface. Since the internal wiring 62 of the flexible substrate 60 is connected to the cables 29 within the thickness range of the load-applied part or the supported part in the load-applied part or the supported part, the electrical connection parts 64 do not protrude from the load-applied part or the supported part along the thickness direction. Therefore, the load cell can be made thinner.

Fig. 36 is a perspective view showing a flexure element 36 with cables 29 according to another variation of the first embodiment. In contrast to Fig. 31, the flexible substrate 60 is located within the recess 370 and is adhered to the lower surface 361L of the flexure part 361. An end of each cable 29 is connected to the internal wiring 62 of the flexible substrate 60 on the flexure part 361. The cables 29 extend from the flexure part 361 through the first connection portion 363, and are fixed on the upper surface 363U of the first connection portion 363 by a tape 50. The cable 29 may extend from the flexure part 361 through the second connection portion 365. In either case, since the electrical connection parts 64 are located within the recess 370 of the flexure element 36, there is a possibility that the thickness of the load cell 34 may be smaller, although the thickness may also depend on the shape, location, and dimensions of the bridge 40.

Fig. 37 is a perspective view showing a flexure element 36 with cables 29 according to another variation of the first embodiment. In this variation, the flexible substrate 60 extends from the flexure part 361 to the first connection portion 363, which is the load-applied part, and the internal wiring 62 of the flexible substrate 60 is connected to cables 29 at a section in the first connection portion 363, the section being within the thickness range of the first connection portion 363. In contrast to Fig. 32, the strain gauges 38 are located within the recess 370, and the flexible substrate 60 is adhered to the lower surface 361L of the flexure part 361. A recess 397 is formed at an edge of the lower surface 363L of the first connection portion 363, and the flexible substrate 60 terminates at the recess 397. The internal wiring 62 of the flexible substrate 60 is connected to the cables 29 inside the recess 397. A recess may be formed at an edge of the lower surface 365L of the second connection portion 365 that is the supported part, the flexible substrate 60 may terminate at the recess, and the internal wiring 62 of the flexible substrate 60 may be connected to the cables 29 inside the recess. Since the internal wiring 62 of the flexible substrate 60 is connected to the cables 29 within the thickness range of the load-applied part or the supported part in the load-applied part or the supported part, the electrical connection parts 64 do not protrude from the load-applied part or the supported part along the thickness direction. Therefore, the load cell can be made thinner.

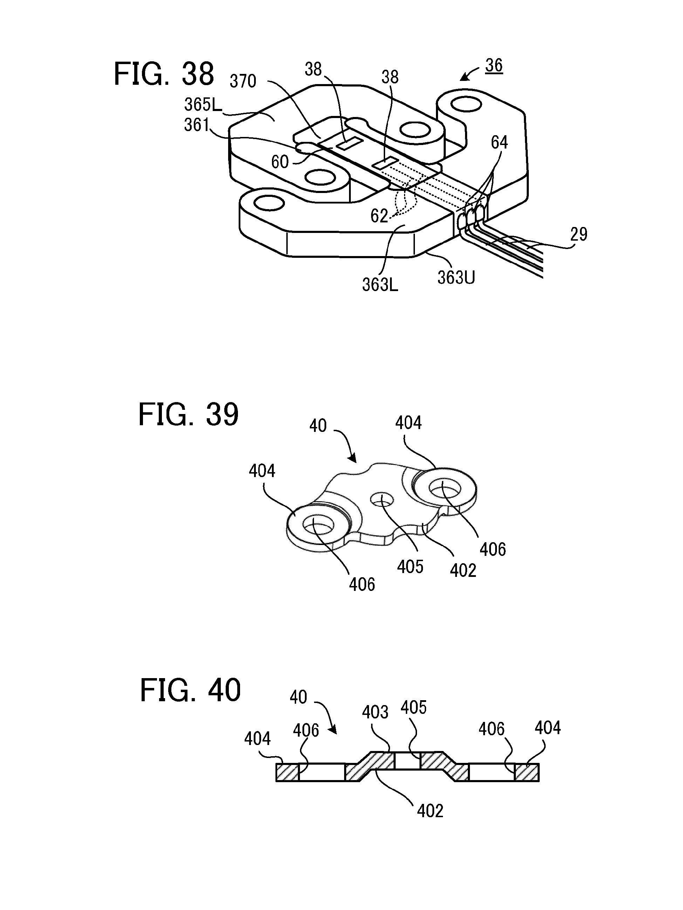

Fig. 38 is a perspective view showing a flexure element 36 with cables 29 according to another variation of the first embodiment. In contrast to Fig. 34, the strain gauges 38 are located within the recess 370, and the flexible substrate 60 is adhered to the lower surface 361L of the flexure part 361. In this variation, the flexible substrate 60 terminates at an end surface of the first connection portion 363. The internal wiring 62 of the flexible substrate 60 is connected to the cables 29 at the end surface of the first connection portion 363. The flexible substrate 60 may terminate at an end surface of the second connection portion 365 that is the supported part, and the internal wiring 62 of the flexible substrate 60 may be connected to the cables 29 at the end surface. Since the internal wiring 62 of the flexible substrate 60 is connected to the cables 29 within the thickness range of the load-applied part or the supported part in the load-applied part or the supported part, the electrical connection parts 64 do not protrude from the load-applied part or the supported part along the thickness direction. Therefore, load cell can be made thinner.

The variations described above, with reference to Figs. 32 to 38, may be applied to the second to the fourth embodiments.

### OTHER VARIATIONS

In the above-described embodiments, a set constituted of the two first arm portions 362 and the first connection portion 363 is a load-applied part to which load is applied, whereas another set constituted of the two second arm portions 364 and the second connection portion 365 is a supported part supported by a supporter. However, use of the flexure element 36 itself is not limited to the above, and rather, the flexure element 36 may be used such that a vertical load may be applied to the second arm portions 364, with the first arm portions 362 being supported by a supporter. In other words, the set constituted of the two first arm portions 362 and the first connection portion 363 may be a supported part supported by a supporter, whereas the other set constituted of the two second arm portions 364 and the second connection portion 365 may be a load-applied part to which load is applied. In this case, the positive sign and the negative sign in Figs. 17 and 26 are inverted. In either case, the flexure element 36 will be used in such a manner that the load-applied part and the supported part are deployed substantially horizontally, and flexure part 361 is bent into an S-shape.

In the above-described embodiments, as shown in Figs. 12 and 13, the bridge 40 of which the central portion 402 has a boss 403 is used. However, it is possible to use another bridge 40 of which the central portion 402 does not have such a boss, as shown in Figs. 39 and 40. In this case, since there is no step caused by the boss in the central portion 402, the bridge 40 may be thinner. Therefore, the load cell 34 may be further thinner.

In the above-described embodiments, rivets 47 and 48 are used for fastening the flexure element 36 to other components, but a screw mechanism (e.g., a set of a bolt and a nut) may be used instead of at least one of the rivets.

While the present invention has been particularly shown and described with reference to preferred embodiments thereof, it will be understood by those skilled in the art that various changes in form and details may be made thereto without departing from the scope of the invention as defined by the claims. Such variations, alterations, and modifications are intended to be encompassed in the scope of the present invention.

**REFERENCE SYMBOLS**

| | | |
|---|---|---|
| [0089] 11: Housing | 12: Platform | 13: Inner Cover |
| 14: Outer Cover | 15: Base | 16: Leg |
| 17: Power Switch | 19: Handle Unit | 20: Operation Box |
| 21, 22: Grip | 23: Display | 24, 25: Operation Button |
| 27: Accommodation Space | 28: Substrate | 29: Cable |
| 32: Load Transferring Member | | 34: Load Cell |
| 36: Flexure Element | 38: Strain Gauge | 40: Bridge |
| 42: Leg Reinforcer | 42a: Through-Hole | |
| 44: Two-Sided Adhesive Tape | | 44a: Through-Hole |
| 47, 48: Rivet | 50: Tape | 55: Setter |
| 56: Material Block | 58: Material Block | 60: Flexible Substrate |
| 62: Internal Wiring | 64: Electrical Connection Part | |
| 160: Cylindrical Portion | 162: Circular-Plate Portion | |
| 164: Through-Hole | 321: Upper Wall | 322: Projection |
| 324: Cap | 361: Flexure Part | 361a: First End |
| 361b: Second End | 362: First Arm Portion (Load-Applied Part) | |
| 363: First Connection Portion (Load-Applied Part) | | |
| 364: Second Arm Portion (Supported Part) | | |
| 365: Second Connection Portion (Supported Part) | | |
| 361U, 362U, 363U, 364U, 365U: Upper Surface | | |
| 361L, 362L, 363L, 364L, 365L: Lower Surface | | 368: Mark |
| 366: First Through-Hole | 367: Second Through-Hole | |
| 369: Groove | 370: Recess | 370A: Recess |
| 371: First Inclined Surface | 372: Second Inclined Surface | |
| 373: Central Horizontal Surface | | |
| 375, 376: End Horizontal Surface | | |
| 390, 392: Rib (Large-Thickness Portion) | | 396: Recess |
| 397: Recess | 402: Central Portion | 404: End Portion |
| 403: Boss | 405: Through-Hole | 406: Through-Hole |
| FL: Floor | | |

## Claims

1. A flexure element (36) comprising:
a load-applied part (362, 363) to which load is applied;
a supported part (364, 365) supported by a supporter;
a flexure part (361) connected to the load-applied part (362, 363) and the supported part (364, 365), strain gauges (38) being attached to the flexure part (361),
wherein the load-applied part (362, 363), the supported part (364, 365), and the flexure part (361) including surfaces (361U, 362U, 363U, 364U, 365U) that are on the same plane,
wherein the flexure part (361) has a thickness that is less than a thickness of the load-applied part (362, 363) and a thickness of the supported part (364, 365), and wherein the flexure part (361) has a recess (370) at a side opposite to the plane, the recess (370) being located between the load-applied part (362, 363) and the supported part (364, 365).

2. The flexure element (36) according to claim 1, wherein the flexure element (36) has an axisymmetric shape with respect to a symmetric axis (Ax), and wherein the flexure part (361) is arranged at a center of the flexure element (36), extends in the same direction as that of the symmetric axis (Ax), and has a first end (361a) and a second end (361b), the flexure element (36) further comprising:
two first arm portions (362) extending in parallel to the symmetric axis (Ax);
a first connection portion (363) extending in a direction crossing the symmetric axis (Ax) and being connected to the first end (361a) of the flexure part (361) and the first arm portions (362);
two second arm portions (364) located closer to the flexure part (361) than the first arm portions (362) and extending in parallel to the symmetric axis (Ax); and
a second connection portion (365) extending in the direction crossing the symmetric axis (Ax) and being connected to the second end (361b) of the flexure part (361) and the second arm portions (364),
wherein one of a set constituted of the two first arm portions (362) and the first connection portion (363) and a set constituted of the two second arm portions (364) and the second connection portion (365) is the load-applied part (362, 363), and wherein the other of the sets is the supported part (364, 365).

3. The flexure element (36) according to claim 1 or 2, wherein the flexure element (36) is formed by powdered metallurgy.

4. The flexure element (36) according to claim 3, wherein the flexure element (36) is obtained by press-molding and sintering a metallic powder.

5. The flexure element (36) according to claim 3, wherein the flexure element (36) is obtained by metal injection molding.

6. The flexure element (36) according to any one of claims 1 to 5, wherein the recess (370) includes a first inclined surface (371) located near the load-applied part (362, 363) and a second inclined surface (372) located near the supported part (364, 365), wherein the first inclined surface (371) is inclined such that the closer to the load-applied part (362, 363), the farther away from the plane, and wherein the second inclined surface (372) is inclined such that the closer to the supported part (364, 365), the farther away from the plane.

7. The flexure element (36) according to any one of claims 1 to 6, wherein the load-applied part (362, 363) includes a rib (390) at a side opposite to the plane, and wherein the supported part (364, 365) includes a rib (392) at a side opposite to the plane.

8. A load cell comprising:
the flexure element (36) according to any one of claims 1 to 7; and
strain gauges (38) attached to the flexure part (361) of the flexure element (36) and generating signals in response to the deformation of the flexure part (361).

9. The load cell according to claim 8, further comprising external cables (29) connected to the strain gauges (38), wherein each of the strain gauges (38) is provided at a flexible substrate (60) including wiring (62) connected to the strain gauge (38), and is located on the flexure part (361), the flexible substrate (60) extending from the flexure part (361) to the load-applied part (362, 363) or the supported part (364, 365), and wherein the wiring (62) in each of the flexible substrates (60) is connected to any one of the external cables (29) at a section in the load-applied part (362, 363) or the supported part (364, 365), the section being within a thickness range of the load-applied part (362, 363) or the supported part (364, 365).

10. A weight measuring device (1) comprising:
the load cell (34) according to claim 8 or 9; and
a platform (12) for transmitting load to the load-applied part (362, 363) of the flexure element (36).
